(19) Europäisches Patentamt
European Patent Office
Office européen des brevets

(11) **EP 3 686 428 B1**

(12) **EUROPEAN PATENT SPECIFICATION**

(45) Date of publication and mention
of the grant of the patent:
**23.02.2022 Bulletin 2022/08**

(21) Application number: **19203024.5**

(22) Date of filing: **14.10.2019**

(51) International Patent Classification (IPC):
**F04B 35/04** (2006.01)       **F04B 49/06** (2006.01)
**F04B 49/12** (2006.01)

(52) Cooperative Patent Classification (CPC):
**F04B 35/045; F04B 49/065; F04B 49/12;**
F04B 2203/0401; F04B 2203/0402

(54) **LINEAR COMPRESSOR AND METHOD FOR CONTROLLING LINEAR COMPRESSOR**

LINEARVERDICHTER UND VERFAHREN ZUR STEUERUNG EINES LINEARVERDICHTERS

COMPRESSEUR LINÉAIRE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.01.2019 KR 20190009891**

(43) Date of publication of application:
**29.07.2020 Bulletin 2020/31**

(73) Proprietor: **LG Electronics Inc.
Seoul 07336 (KR)**

(72) Inventors:
• **KIM, Heesun
08592 Seoul (KR)**
• **KIM, Youngdoo
08592 Seoul (KR)**
• **HU, Jinseok
08592 Seoul (KR)**

(74) Representative: **Vossius & Partner
Patentanwälte Rechtsanwälte mbB
Siebertstrasse 3
81675 München (DE)**

(56) References cited:
WO-A1-2008/139922      CN-A- 105 890 247
JP-A- H05 164 058      US-A1- 2003 177 773
US-B2- 6 715 301

EP 3 686 428 B1

**Description**

BACKGROUND OF THE INVENTION

1. Field of the Invention

The present disclosure related to a linear compressor and a control method thereof, and more particularly, to a linear compressor that controls the movement of a piston without a separate sensor and a control method thereof.

2. Background of the Invention

Generally, a compressor is an apparatus for converting mechanical energy into compressive energy of a compressible fluid and is used as a part of a refrigeration apparatus, for example, a refrigerator or an air conditioner.

Compressors may be categorized into reciprocating compressors, rotary compressors, and scroll compressors. The reciprocating compressor has a compression space formed between a piston and a cylinder to suction or discharge a working gas, thereby compressing refrigerant by the piston linearly reciprocating inside the cylinder. Also, the rotary compressor has a compression space formed between a cylinder and an eccentrically rotating roller to suction or discharge a working gas, thereby compressing refrigerant by the roller eccentrically rotating along an inner wall of the cylinder. The scroll compressor has a compression space formed between an orbiting scroll and a fixed scroll to suction or discharge a working gas, thereby compressing refrigerant by the orbiting scroll rotating along with the fixed scroll.

A reciprocating compressor suctions, compresses, and discharges a refrigerant gas by an inner piston linearly reciprocating inside a cylinder. Reciprocating compressors are classified into a recipro-type compressor and a linear-type compressor according to a piston driving scheme.

A recipro-type compressor is a type of compressor in which a crankshaft is coupled to a rotating motor and a piston is coupled to the crankshaft to convert a rotational movement of the motor into a linearly reciprocating movement. A linear-type compressor is a type of compressor in which a piston is connected to a linearly moving mover of a motor to convert a linear movement of the motor into a reciprocating movement of the piston.

Reciprocating compressors include an electric power unit for generating a driving force and a compression unit for receiving the driving force from the power unit and compressing a fluid. Generally, a motor is used as the electric power unit, and a linear motor is used for the linear compressor.

A linear motor itself generates a linear driving force and thus needs no mechanical conversion device and has a less complex structure. Also, a linear motor can reduce loss due to energy conversion and can significantly reduce noise because it has no connecting parts causing friction and abrasion. Also, when a linear-type reciprocating compressor (hereinafter referred to as a linear compressor) is used in a refrigerator or air conditioner, a compression ratio may be changed by changing a stroke voltage applied to the linear compressor, thereby allowing the linear compressor to be used even for variable freezing capacity control.

Generally, the linear compressor may operate in a first mode in which power is increased or in a second mode in which power consumption is reduced depending on an operating state of a relay provided therein. The linear compressor that is set to the first mode and the linear compressor that is set to the second mode have different inductance values.

Accordingly, the control unit of the linear compressor controls the operation of the compressor using different parameters according to the set mode.

In this case, when a failure occurs in the relay provided in the compressor, the control unit cannot accurately control the operation of the linear compressor. That is, the control unit controls the operation of the compressor by using parameters corresponding to the second mode while failure occurs in the relay and thus the switching from the first mode to the second mode is not performed. In this case, a stroke estimate, a phase difference between stroke and current, and the like may be accurately computed.

Accordingly, when a linear compressor has operation modes switched by the relay operation, it is necessary to diagnose whether or not the relay operates normally and determine control parameters according to the diagnosis result.

US 6 715 301 B2 relates to an apparatus and a method for controlling a driving of the reciprocating compressor for a refrigerator using a linear motor in which capacitance is varied according to a variation of a driving load.

CN 105 890 247 A discloses an air conditioner, and a control method and device for a compressor of the air conditioner, in which a pressure switch for controlling starting and stopping of the compressor is arranged inside the air conditioner.

JP H05 164058 A and WO 2008/139922 A1 disclose methods to detect failure of a relay of a compressor system.

SUMMARY OF THE INVENTION

The invention is specified by the independent claim. Preferred embodiments are defined in the dependent claims.

The present invention provides a linear compressor capable of monitoring whether a failure has occurred in the relay provided in the linear compressor.

The present invention also provides a linear compressor capable of accurately controlling the operation of the linear compressor even when a relay provided in the linear compressor fails.

To achieve these and other advantages and in accordance with the purpose of this specification, as embodied and broadly described herein, there is provided a linear compressor as defined by independent claim 1.

In particular, the control unit detects whether the relay fails based on a changed in current sensed before and after the operation state of the relay is changed.

According to the invention, the control unit calculates a magnitude of a first current, which is a current flowing in the linear motor before the state of the relay is switched, calculates a magnitude of a second current, which is a current flowing in the linear motor after the state of the relay is switched, and compares the magnitude of the first current and the magnitude of the second current to determine whether the relay fails.

According to the invention, the control unit calculates a ratio between the first current and the second current and determines that the relay fails when the calculated ratio is in a previously set range.

In an embodiment, the control unit operates the linear motor under the same condition while calculating the magnitude of the first current and the magnitude of the second current.

In an embodiment, a power setpoint applied to the linear motor while the control unit calculates the magnitude of the first current corresponds to a power setpoint applied to the linear motor while the control unit calculates the magnitude of the second current.

In an embodiment, the set range is set based on a constant associated with the linear motor.

In an embodiment, the control unit determines that the relay is normal when the calculated ratio is not in the previously set range.

In an embodiment, the linear compressor further includes an inductor having a value varying depending on the state of the relay.

In an embodiment, the linear compressor further includes an inverter having a plurality of switching elements to supply power to the linear motor, wherein the inductor is connected between the switching elements.

## ADVANTAGEOUS EFFECTS OF THE INVENTION

With the linear compressor according to the present invention, a user may check whether the relay fails, and thus it is possible to prevent an unnecessary increase in repair cost.

Also, with the linear compressor according to the present invention, it is possible to accurately compute the stroke of the linear compressor or the phase difference between the stroke and the motor current even when the relay fails.

## BRIEF DESCRIPTION OF THE DRAWINGS

FIG. 1 is a conceptual view showing a compressor failure diagnosis apparatus.

FIG. 2 is a circuit diagram showing a motor circuit of a compressor to be diagnosed.

FIG. 3 is a graph for comparing an electric current flowing in the main winding of the motor and an electric current flowing in the auxiliary winding.

FIG. 4 is a conceptual view of a refrigerator having a linear compressor.

## DETAILED DESCRIPTION OF THE INVENTION

The present invention disclosed herein may be applied to a device and method for controlling a linear compressor. However, the invention disclosed herein is not limited thereto, but may be applied to control devices, control methods, motor control devices, motor control methods, motor noise test devices, and motor noise test methods for all existing compressors to which the present invention is applicable.

Also, in the description of the technology disclosed in this specification, a detailed description of related arts will be omitted when it is determined that the description may obscure the scope of the technology disclosed in this specification. Also, it should be noted that the accompanying drawings are merely illustrated to easily understand the technical scope disclosed in the specification, and therefore, they should not be construed to limit the scope of the invention as defined by the independent claims.

In the following description of the present invention, the configuration and corresponding effects of the present invention will be described to solve the above problems.

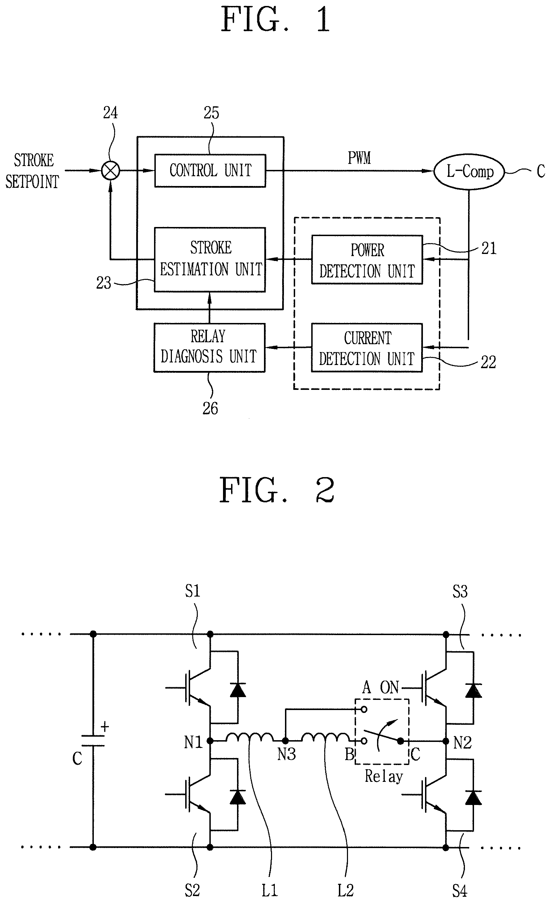

An embodiment associated with elements of a linear compressor will be described below with reference to FIG. 1.

FIG. 1 is a block diagram showing a configuration of a control device of a reciprocating compressor according to an embodiment of the present invention.

As shown in FIG. 1, the control device of the reciprocating compressor according to an embodiment of the present invention includes a sensing unit a configured to sense a motor voltage and a motor current associated with a motor.

In detail, referring to FIG. 1, the sensing unit includes a voltage detection unit 21 configured to detect a motor voltage applied to a motor and a current detection unit 22 configured to detect a motor current applied to the motor. The voltage detection unit 21 and the current detection unit 22 may deliver information associated with the detected motor voltage and motor current to a control unit 25 or a stroke estimation unit 23.

Also, as shown in FIG. 1, the compressor or the control device thereof according to the present invention may include the stroke estimation unit 23 configured to estimate a stroke on the basis of the detected motor current and motor voltage, and the motor parameters, a comparator 24 configured to compare the stroke estimate and a stroke setpoint, and the control unit 25 configured to change the voltage applied to the motor to control the stroke.

It will be appreciated that the components of the control device shown in FIG. 1 are not essential and thus a compressor control device having more or fewer components can be implemented.

Meanwhile, the compressor control device according to an embodiment of the present invention is allocable to the reciprocating compressor, but the following description will be based on the linear compressor.

Also, the control unit 25 of the linear compressor may be present separately from a refrigerator control unit mounted on a refrigerator to control the operation of the refrigerator. Accordingly, the control unit 25 of the linear compressor may be defined as a compressor control unit.

The components thereof will be described below.

The voltage detection unit 21 is configured to detect the motor voltage applied to the compressor motor. In some embodiments, the voltage detection unit 21 may include a rectification part and a direct current (DC) link part. The rectification part may rectify alternating current (AC) power having a voltage of a predetermined magnitude and output a DC voltage, and the DC link part 12 may include two capacitors.

Also, the current detection unit 22 is configured to detect the motor current applied to the motor. In some cases, the current detection unit 22 may sense a current flowing a coil of the compressor motor.

Also, the stroke estimation unit 23 computes the stroke estimate using the detected motor current and motor voltage and the motor parameters and apply the computed stroke estimate to the comparator 24.

In this case, the stroke estimation unit 23 computes the stroke estimate using Equation 1 below:

[Equation 1]

$$x = \frac{1}{\alpha} \int (V_m - Ri_m - L\frac{di_m}{dt})dt ,$$

where x is a stroke, $\alpha$ is a motor constant or a counter electromotive force, $V_m$ is a motor voltage, $i_m$ is a motor current, R is resistance, and L is inductance.

Thus, the comparator 24 may compare the stroke estimate and the stroke setpoint and apply a difference signal thereof to the control unit 25. Then, the control unit 25 may control the stroke by changing the voltage applied to the motor.

That is, the control unit 25 decreases the applied motor voltage when the stroke estimate is larger than the stroke setpoint and increases the applied motor voltage when the stroke estimate is smaller than the stroke setpoint.

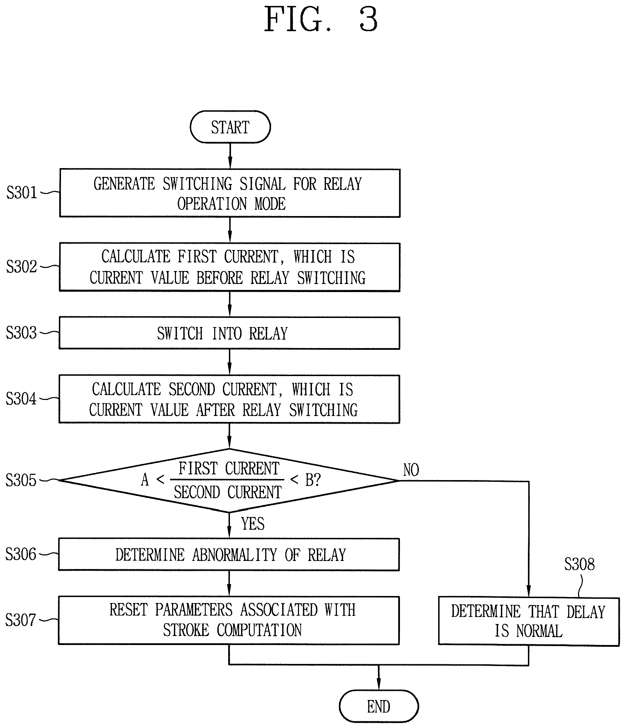

The relay diagnosis unit 26 may determine whether the operation of the relay is normal. A method of determining whether the operation of the relay is normal will be described below with reference to FIG. 3.

Referring to FIG. 2, the relay provided in the compressor and a circuit configuration near the relay are shown.

As shown in FIG. 2, the motor of the compressor is supplied with power by an inverter consisting of a plurality of switching elements S1, S2, S3, and S4. In this case, the relay, a first inductor L1, and a second inductor L2 area provided between a first node N1, which is a contact point between the first switch S1 and the second switch S2, and a second node N2, which is a contact point between the third switch S3 and the fourth switch S4.

When the linear compressor shown in FIG. 2 is installed in the refrigerator, the control device of the refrigerator may generate a switching signal for switching the operation mode of the linear compressor as necessary.

That is, when the refrigerator requires larger cooling power, the control device of the refrigerator may generate the switching signal such that the relay of the linear compressor is connected to point A. In this case, the inductance formed between the compressor and the switch may correspond to the inductance value of the first inductor L1. Hereinafter, a state in which the relay is connected to point A is defined as a first operation mode of the linear compressor.

In a normal case, the control device of the refrigerator may generate the switching signal such that the relay of the linear compressor is connected to point B. In this case, the inductance formed between the compressor and the switch may correspond to the inductance values of the first inductor L1 and the second inductor L2. Hereinafter, a state in which the relay is connected to point B is defined as a first operation mode of the linear compressor. Thus, the linear compressor further comprises an inductor L1, L2 having a value that varies depending on the state of the relay. In addition, the linear compressor further comprises an inverter S1 to S4 having a plurality of switching elements to supply power to the linear motor. In this regard, the inductor L1, L2 is connected between the switching elements S1 to S4.

A method of determining whether the relay configured as shown in FIG. 2 fails will be described in detail below with reference to FIG. 3.

First, a switching signal for a relay operation mode may be generated (S301). That is, a switching signal for changing the operation mode of the linear compressor may be generated. The switching signal may be generated by a control device of an electronic device having the compressor or by a mechanical switch provided in the linear compressor.

When the switching signal is generated, the control unit 25 calculates the magnitude of a first current, which is a current value before the relay is switched (S302).

When the magnitude of the first current is calculated, the control unit 25 may switch the operation mode of the relay (S303). Meanwhile, the control unit 25 may operate a linear motor under the same condition while calculating the magnitude of the first current and the magnitude of the second current. In addition, the control unit 25 may control a power setpoint applied to the linear motor while the control unit calculates the magnitude of the first current corresponds to a power setpoint applied to the linear motor while the control unit calculates the magnitude of the second current.

The control unit 25 calculates the magnitude of a second current, which is a current value after the operation mode of the relay is switched (S304).

Also, the control unit 25 determines whether a ratio between the magnitude of the first current and the magnitude of the second current is in a previously set range (S305). In this regard, the range is set based on a constant associated with the linear motor.

When the ratio between the magnitude of the first current and the magnitude of the second current is in the previously set range, the control unit 25 determines that a failure has occurred in the relay (S306) and then resets parameters associated with the stroke computation (S307). Meanwhile, the control unit 25 may calculate a variation of the second current with respect to the first current and determine whether the relay fails based on the calculated variation.

On the other hand, when the ratio between the magnitude of the first current and the magnitude of the second current is not in the previously set range, the control unit may determine that the relay is normal (S308).

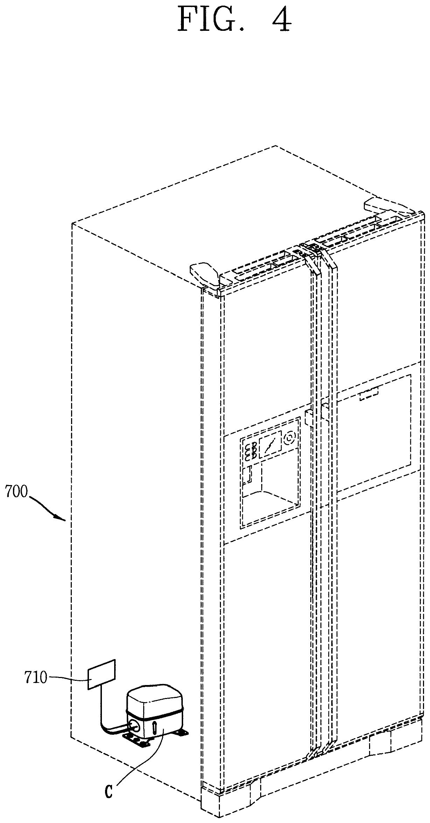

Referring to FIG. 4, a refrigerator 700 having the linear compressor is shown. The refrigerator 700 may include a linear compressor 11 and a refrigerator control unit 710, and the refrigerator control unit 710 may generate a mode switching signal for switching the operation mode of the linear compressor. Referring to FIG 1 and 4, the linear compressor 11 may comprise a cylinder configured to form a compression space, a piston configured to move in the cylinder, a linear motor configured to drive the piston, and a current detection unit 22 configured to sense a current flowing in the linear motor. Referring to FIG 2 and 4, the linear compressor 11 may further comprise a relay configured to change an operation mode of the linear motor when the mode switching signal is generated by the refrigerator control unit 710.

In detail, the refrigerator control unit 710 periodically detects a change in load of the refrigerator. When a load variation is greater than or equal to a reference, the refrigerator control unit 710 may generate a mode switching signal such that the relay included in the linear compressor is connected to point A. Also, when there is a need to increase a cooling force of the refrigerator, the refrigerator control unit 710 may generate a mode switching signal such that the relay included in the linear compressor is connected to point A.

On the other hand, the refrigerator control unit 710 may generate a mode switching signal such that the relay included in the linear compressor is connected to point B under general driving conditions.

The refrigerator control unit may communicate with the compressor control unit (or the control unit 25) and may receive, from the compressor control unit, information regarding whether the relay included in the linear compressor fails. In this regard, with the compressor control unit 25 is configured to set at least one parameter for computing a stroke of the piston according to the operation mode changed by the relay. In addition, the compressor control unit 25 may calculate a magnitude of a first current, which is a current flowing in the linear motor before the state of the relay is switched, calculate a magnitude of a second current, which is a current flowing in the linear motor after the state of the relay is switched, and compare the magnitude of the first current and the magnitude of the second current to determine whether the relay fails. Meanwhile, when the mode switching signal is generated by the refrigerator control unit 710, the compressor control unit 25 may calculate a ratio between the first current and the second current and determines that the relay fails when the calculated ratio is in a previously set range.

Although not shown in FIG. 4, the refrigerator may include an output unit such as a display and a communication unit such as a WiFi module. Accordingly, the refrigerator control unit may output the information regarding whether the relay fails, which is received from the compressor control unit, to the display of the refrigerator or may transmit the information to a user terminal by means of the communication unit.

With the linear compressor according to the present invention, a user may check whether the relay fails, and

EP 3 686 428 B1

thus it is possible to prevent an unnecessary increase in repair cost.

Also, with the linear compressor according to the present invention, it is possible to accurately compute the stroke of the linear compressor or the phase difference between the stroke and the motor current even when the relay fails.

**Claims**

1. A linear compressor comprising:

   a cylinder configured to form a compression space;
   a piston configured to move in the cylinder;
   a linear motor configured to drive the piston;
   a voltage detection unit (21) configured to detect the motor voltage applied to the linear motor;
   a current detection unit (22) configured to sense a current flowing in the linear motor;
   a relay configured to change an operation mode of the linear motor;
   a stroke estimation unit (23) configured to compute a stroke estimate using the detected motor current and motor voltage and the motor parameters, the stroke estimation unit (23) configured to compute the stroke estimate using Equation 1 below:

$$x = \frac{1}{\alpha} \int (V_m - Ri_m - L\frac{di_m}{dt})dt$$

   where parameter x is a stroke, $\alpha$ is a motor constant or a counter electromotive force, $V_m$ is the motor voltage, $i_m$ is the motor current, R is resistance, and L is inductance, and
   a control unit (25) configured to set at least one parameter associated with the computation of the stroke estimate according to the operation mode changed by the relay, wherein the control unit (25) is configured to:
   calculate a magnitude of a first current, which is a current flowing in the linear motor before the state of the relay is switched,
   calculate a magnitude of a second current, which is a current flowing in the linear motor after the state of the relay is switched,
   compare the magnitude of the first current and the magnitude of the second current to determine whether the relay fails,
   calculate a ratio between the first current and the second current and to determine that the relay fails when the calculated ratio is in a previously set range, and
   when the relay fails, reset parameters associated with the computation of the stroke estimate.

2. The linear compressor of claim 1, wherein the control unit (25) is configured to operate the linear motor under a same condition while calculating the magnitude of the first current and the magnitude of the second current.

3. The linear compressor of any one of claims 1 and 2, wherein the control unit is configured to apply a power setpoint to the linear motor while the control unit (25) calculates the magnitude of the first current, wherein the applied power setpoint corresponds to a power setpoint applied to the linear motor while the control unit calculates the magnitude of the second current.

4. The linear compressor of any one of claims 1 to 3, wherein the range is set based on a constant associated with the linear motor.

5. The linear compressor of any one of claims 1 to 4, wherein the control unit (25) determines that the relay is normal when the calculated ratio is not in the previously set range.

6. The linear compressor of any one of claims 1 to 5, further comprising an inductor (L1, L2) having an inductance value that varies depending on the state of the relay.

7. The linear compressor of claim 6, further comprising an inverter (S1 to S4) having a plurality of switching elements configured to supply power to the linear motor,
   wherein the inductor (L1, L2) is connected between the switching elements.

8. A refrigerator (700) having a linear compressor according to any one of claims 1 to 7.

**Patentansprüche**

1. Linearverdichter, der aufweist:

   einen Zylinder, der konfiguriert ist, einen Verdichtungsraum zu bilden;
   einen Kolben, der konfiguriert ist, sich im Zylinder zu bewegen;
   einen Linearmotor, der konfiguriert ist, den Kolben anzutreiben;
   eine Spannungserfassungseinheit (21), die konfiguriert ist, die an den Linearmotor angelegte Motorspannung zu erfassen;
   eine Stromerfassungseinheit (22), die konfiguriert ist, einen Strom zu erfassen, der im Linearmotor fließt;
   ein Relais, das konfiguriert ist, einen Betriebsmodus des Linearmotors zu ändern;
   eine Hubschätzeinheit (23), die konfiguriert ist, eine Hubschätzung unter Verwendung des erfassten Motorstroms und der erfassten Motorspannung und der Motorparameter zu berechnen, wobei die Hubschätzeinheit (23) konfiguriert ist, die Hubschätzung unter Verwendung der Gleichung 1 unten zu berechnen:

$$x = \frac{1}{\alpha} \int (V_m - Ri_m - L\frac{di_m}{dt})dt$$

   wobei der Parameter x ein Hub ist, $\alpha$ eine Motorkonstante oder eine gegenelektromotorische Kraft ist, $V_m$ die Motorspannung ist, $i_m$ der Motorstrom ist, $R$ der Widerstand ist, und $L$ die Induktivität ist, und
   eine Steuereinheit (25), die konfiguriert ist, mindestens einen Parameter, der mit der Berechnung der Hubschätzung verbunden ist, gemäß dem durch das Relais geänderten Betriebsmodus einzustellen,
   wobei die Steuereinheit (25) konfiguriert ist:

   eine Größe eines ersten Stroms zu berechnen, der ein Strom ist, der im Linearmotor fließt, bevor der Zustand des Relais umgeschaltet wird,
   eine Größe eines zweiten Stroms zu berechnen, der ein Strom ist, der im Linearmotor fließt, nachdem der Zustand des Relais umgeschaltet wird,
   die Größe des ersten Stroms und die Größe des zweiten Stroms zu vergleichen, um festzustellen, ob das Relais versagt,
   ein Verhältnis zwischen dem ersten Strom und dem zweiten Strom zu berechnen und
   festzustellen, dass das Relais versagt, wenn sich das berechnete Verhältnis in einem vorher eingestellten Bereich befindet, und
   wenn das Relais versagt, Parameter zurückzusetzen, die mit der Berechnung der Hubschätzung verbunden sind.

2. Linearverdichter nach Anspruch 1, wobei die Steuereinheit (25) konfiguriert ist, den Linearmotor unter denselben Bedingungen zu betreiben, während die Größe des ersten Stroms und die Größe des zweiten Stroms berechnet wird.

3. Linearverdichter nach einem der Ansprüche 1 und 2, wobei die Steuereinheit konfiguriert ist, einen Leistungssollwert auf den Linearmotor anzuwenden, während die Steuereinheit (25) die Größe des ersten Stroms berechnet, wobei der angewendete Leistungssollwert einem Leistungssollwert entspricht, der auf den Linearmotor angewendet wird, während die Steuereinheit die Größe des zweiten Stroms berechnet.

4. Linearverdichter nach einem der Ansprüche 1 bis 3, wobei der Bereich beruhend auf einer Konstante eingestellt wird, die mit dem Linearmotor verbunden ist.

5. Linearverdichter nach einem der Ansprüche 1 bis 4, wobei die Steuereinheit (25) feststellt, dass das Relais normal ist, wenn sich das berechnete Verhältnis nicht im vorher eingestellten Bereich befindet.

6. Linearverdichter nach einem der Ansprüche 1 bis 5, der ferner eine Induktivität (L1, L2) aufweist, die einen Induktivitätswert aufweist, der abhängig vom Zustand des Relais variiert.

**7.** Linearverdichter nach Anspruch 6, der ferner einen Wechselrichter (S1 bis S4) mit mehreren Schaltelementen aufweist, der konfiguriert ist, dem Linearmotor Strom zuzuführen, wobei die Induktivität (L1, L2) zwischen die Schaltelemente geschaltet ist.

**8.** Kühlschrank (700) mit einem Linearverdichter nach einem der Ansprüche 1 bis 7.

**Revendications**

**1.** Compresseur linéaire, comprenant :

un cylindre prévu pour former un espace de compression ;
un piston prévu pour se déplacer dans le cylindre ;
un moteur linéaire prévu pour entrainer le piston ;
une unité de détection de tension (21) prévue pour détecter la tension de moteur appliquée au moteur linéaire ;
une unité de détection de courant (22) prévue pour détecter un courant circulant dans le moteur linéaire ;
un relais prévu pour changer le mode de service du moteur linéaire ;
une unité d'estimation de course (23) prévue pour calculer une estimation de course au moyen du courant de moteur et de la tension de moteur détectés et des paramètres de moteur, ladite unité d'estimation de course (23) étant prévue pour calculer l'estimation de course au moyen de l'équation 1 ci-dessous :

$$x = \frac{1}{\alpha} \int (V_m - Ri_m - L\frac{di_m}{dt})dt$$

où le paramètre x est une course, $\alpha$ est une constante de moteur ou une force contre-électromotrice, $V_m$ est la tension de moteur, $i_m$ est le courant de moteur, $R$ une résistance, et $L$ une inductance, et
où une unité de commande (25) est prévue pour régler au moins un paramètre associé au calcul de l'estimation de course en fonction du mode de service changé par le relais, ladite unité de commande (25) étant prévue pour :
calculer l'amplitude d'un premier courant, lequel est un courant circulant dans le moteur linéaire avant commutation de l'état du relais,
calculer l'amplitude d'un deuxième courant, lequel est un courant circulant dans le moteur linéaire après commutation de l'état du relais,
comparer l'amplitude du premier courant et l'amplitude du deuxième courant pour déterminer si le relais est défaillant,
calculer un rapport entre le premier courant et le deuxième courant et déterminer que le relais est défaillant si le rapport calculé est compris dans une plage préalablement définie, et,
si le relais est défaillant, réinitialiser les paramètres associés au calcul de l'estimation de course.

**2.** Compresseur linéaire selon la revendication 1, où l'unité de commande (25) est prévue pour activer le moteur linéaire à une même condition en calculant l'amplitude du premier courant et l'amplitude du deuxième courant.

**3.** Compresseur linéaire selon la revendication 1 ou la revendication 2, où l'unité de commande est prévue pour appliquer une consigne de puissance au moteur linéaire pendant que l'unité de commande (25) calcule l'amplitude du premier courant, la consigne de puissance appliquée correspondant à une consigne de puissance appliquée au moteur linéaire pendant que l'unité de commande calcule l'amplitude du deuxième courant.

**4.** Compresseur linéaire selon l'une des revendications 1 à 3, où la plage est définie sur la base d'une constante associée au moteur linéaire.

**5.** Compresseur linéaire selon l'une des revendications 1 à 4, où l'unité de commande (25) détermine que le relais est normal si le rapport calculé n'est pas compris dans la plage préalablement définie.

**6.** Compresseur linéaire selon l'une des revendications 1 à 5, comprenant en outre une bobine d'induction (L1, L2) ayant une valeur d'inductance variant en fonction de l'état du relais.

**7.** Compresseur linéaire selon la revendication 6, comprenant en outre un onduleur (S1 à S4) ayant une pluralité d'éléments de commutation prévus pour alimenter le moteur linéaire en courant, la bobine d'induction (L1, L2) étant connectée entre les éléments de commutation.

8. Réfrigérateur (700), pourvu d'un compresseur linéaire selon l'une des revendications 1 à 7.

# FIG. 1

# FIG. 2

# FIG. 3

START

S301 — GENERATE SWITCHING SIGNAL FOR RELAY OPERATION MODE

S302 — CALCULATE FIRST CURRENT, WHICH IS CURRENT VALUE BEFORE RELAY SWITCHING

S303 — SWITCH INTO RELAY

S304 — CALCULATE SECOND CURRENT, WHICH IS CURRENT VALUE AFTER RELAY SWITCHING

S305 — $A < \dfrac{\text{FIRST CURRENT}}{\text{SECOND CURRENT}} < B?$    NO

YES

S306 — DETERMINE ABNORMALITY OF RELAY

S307 — RESET PARAMETERS ASSOCIATED WITH STROKE COMPUTATION

S308 — DETERMINE THAT DELAY IS NORMAL

END

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6715301 B2
- CN 105890247 A
- JP H05164058 A
- WO 2008139922 A1